(19) **Europäisches Patentamt / European Patent Office / Office européen des brevets**

(11) **EP 2 877 257 B1**

(12) # EUROPEAN PATENT SPECIFICATION

(45) Date of publication and mention
of the grant of the patent:
**04.10.2017 Bulletin 2017/40**

(21) Application number: **13823813.4**

(22) Date of filing: **11.07.2013**

(51) Int Cl.:
**B01D 3/42** $^{(2006.01)}$    **C10G 7/12** $^{(2006.01)}$

(86) International application number:
**PCT/US2013/050007**

(87) International publication number:
**WO 2014/018271 (30.01.2014 Gazette 2014/05)**

(54) **METHOD AND APPARATUS FOR MEASUREMENT AND CALCULATION OF DEW POINT FOR FRACTIONATION COLUMN OVERHEADS**

VERFAHREN UND VORRICHTUNG ZUR MESSUNG UND BERECHNUNG DES TAUPUNKTES FÜR FRAKTIONIERUNGSKOLONNENOVERHEADS

PROCÉDÉ ET APPAREIL DE MESURE ET DE CALCUL DU POINT DE ROSÉE POUR DES DISTILLATS DE TÊTE DE COLONNE DE FRACTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2012 US 201213558887
26.07.2012 US 201213558896**

(43) Date of publication of application:
**03.06.2015 Bulletin 2015/23**

(73) Proprietor: **UOP LLC
Des Plaines, Illinois 60017-5017 (US)**

(72) Inventors:
• **HOEHN, Richard K.
Des Plaines, Illinois 60017-5017 (US)**
• **HARRIS, James W.
Des Plaines, Illinois 60017-5017 (US)**
• **GOYAL, Amit
Des Plaines, Illinois 60017-5017 (US)**
• **ZHU, Xin X.
Des Plaines, Illinois 60017-5017 (US)**

(74) Representative: **Boult Wade Tennant
Verulam Gardens
70 Gray's Inn Road
London WC1X 8BT (GB)**

(56) References cited:
**GB-A- 1 221 926      SU-A1- 973 141
US-A- 3 296 097      US-A- 3 428 528
US-A- 4 526 657      US-B1- 6 558 515
US-B1- 6 640 161      US-B1- 6 640 161**

**EP 2 877 257 B1**

Printed by Jouve, 75001 PARIS (FR)

## Description

FIELD OF THE INVENTION

This invention relates to generally to fractionation columns and more particularly to apparatus and methods for controlling the operation of fractionation columns to avoid column flooding.

BACKGROUND OF THE INVENTION

Many different applications in the hydrocarbon refining and petrochemical industries employ the use of steam strippers to remove lower boiling compounds from liquid streams containing various boiling range compounds. The introduction of steam into a steam stripped fractionation column is beneficial for the separation of different boiling compounds. However, if too much steam is added for the amount of heat available in the column, steam will condense on the stripper trays where water builds up and eventually floods the stripper, causing major operational upsets. The presence of liquid water also leads to increased corrosion of the trays and walls of the stripper column.

US Patent No. 6,640,161, describes a computer method for calculating the dew point and providing a warning of operating conditions which may lead to flooding of the column. The total moles of hydrocarbon passing overhead in the steam stripped fractionation column and the total moles of water as steam passing overhead in the steam stripped fractionation column are measured. Using that information, the mole fraction of water as steam passing overhead in the column is continuously calculated. The overhead pressure of the column is measured, and a continuous determination of the partial pressure of water is made by calculating the product of the mole fraction of water as steam passing overhead in the column and the column overhead pressure. In addition, a continuous determination of the dew point temperature of the steam passing overhead in the column is made. The top temperature of the column is measured and provided to the computer wherein the difference between the calculated dew point temperature of the steam passing overhead in the column and the measured top temperature is calculated. As this calculated difference approaches zero, the potential for flooding the column increases. A predetermined value is selected and compared with the calculated difference in order to generate an alarm to alert the operator of unsatisfactory column operation. Once an alarm is detected, the operator may then make the appropriate adjustments to the column in order to avoid flooding the column.

However, US Patent No. 6,640,161 does not describe the instrumentation and connections among the instruments needed to make the needed measurements. Without the proper instrumentation, the calculation method will not report useful information and flooding conditions can occur. This leads to expensive repairs and lost production.

Therefore, there is a need for instrumentation for, and methods of, calculating water dew point in a steam stripped fractionation column.

SUMMARY OF THE INVENTION

One aspect of the invention involves a method for controlling operation of a fractionation column.

Another aspect of the present invention relates to apparatus for controlling fractionation column operation.

In one embodiment, the method includes measuring the molecular weight or specific gravity, the temperature, and the pressure of an overhead vapor stream from the fractionation column to a receiver; measuring the temperature of a hydrocarbon liquid stream from the receiver; measuring the mass flow rate of a stripper reflux liquid stream, or a reflux hydrocarbon liquid stream and a stripper net overhead hydrocarbon liquid stream; measuring the mass flow rate of a stripper vapor stream from the receiver; and measuring the flow rate of a water stream from the receiver. The total overhead flow is determined using the flow rate of the water stream from the receiver, the mass flow rate of the stripper vapor stream from the receiver, the mass flow rate of the stripper hydrocarbon liquid stream, or the mass flow rate of the stripper net overhead hydrocarbon liquid and the mass flow rate of the reflux hydrocarbon liquid stream. The total overhead moles are determined from the total overhead flow and the molecular weight of the overhead vapor stream. The total moles of water are determined from the water flow from the receiver and the measured temperature of the hydrocarbon liquid stream from the receiver. The partial pressure of water in the overhead vapor stream is determined from the total moles of water, the total overhead moles, and the measured overhead pressure. The dew point temperature is determined at the determined partial pressure of water. The dew point margin is determined from the determined dew point and the temperature of the overhead vapor stream. The calculated dew point margin is compared with a predetermined minimum dew point margin, and an alarm is initiated and/or an operating condition of the fractionation column is changed when the calculated dew point margin is less than the predetermined minimum dew point margin.

In another embodiment, the apparatus includes a fractionation column having an overhead outlet and a reflux inlet and a receiver having an inlet, a water outlet, a hydrocarbon liquid outlet, and a vapor outlet. There is an overhead vapor line connecting the overhead outlet of the fractionation column with the inlet of the receiver. A molecular weight analyzer or a specific gravity analyzer, a temperature gauge, and a pressure gauge are in communication with the overhead vapor line. There is a hydrocarbon liquid outlet line connected to the hydrocarbon liquid outlet of the receiver, which splits into a stripper reflux line connected to the reflux inlet of the fractionation column and a stripper net overhead liquid line. There is a temperature gauge in communication with the hydrocarbon liquid outlet line. There is a stripper hydrocarbon liquid mass flow meter in fluid communication with the hydrocarbon liquid outlet line, or a stripper reflux hydrocarbon liquid mass flow meter in communication with the stripper reflux line, and a stripper net overhead hydrocarbon liquid mass flow meter in communication with the stripper net overhead liquid line. There is a stripper vapor mass flow meter in communication with a vapor outlet line from the vapor outlet of the receiver. There is a water flow meter in communication with a water outlet line from the water outlet of the receiver. The apparatus also includes at least one computer in communication with the molecular weight analyzer or specific gravity analyzer; the overhead vapor line pressure gauge; the overhead vapor line temperature gauge; the hydrocarbon liquid outlet line temperature gauge; the stripper hydrocarbon liquid mass flow meter or the stripper reflux hydrocarbon liquid mass flow meter and the stripper net overhead hydrocarbon liquid mass flow meter; the stripper vapor mass flow meter; and the water flow meter.

BRIEF DESCRIPTION OF THE DRAWINGS

Fig. 1 illustrates one embodiment of the control instrumentation for the steam stripped fractionation column.
Fig. 2 illustrates another embodiment of the control instrumentation for the steam stripped fractionation column.
Fig. 3 illustrates the steps of one embodiment of the control method.

DETAILED DESCRIPTION OF THE INVENTION

The present invention helps to prevent undesirable condensation of steam by providing the operator with an alarm that warns of conditions that approach the water dew point so that the appropriate adjustments can be made before the stripper column is upset. It identifies the instrumentation needed and the appropriate calculations to determine the dew point and dew point margin in real time, allowing for proper control and operation of the column, which helps to minimize energy consumption.

The approach provides simple calculations which are easily configured within common control systems for on-line water dew point margin indication in real time. The overhead flow from the column is determined by measuring receiver vapor, receiver water boot, reflux hydrocarbon liquid, and net overhead hydrocarbon liquid. The receiver vapor, reflux hydrocarbon liquid, and net overhead hydrocarbon liquid are measured using mass flow meters, such as coriolis flow meters. The mass flow meters provide information to the calculation method that is not impacted by differences or changes in specific gravity. Mass flow meters are only used where they are most needed to limit the cost of the flow meters. For example, the water boot mass flow can be found by correcting the volume flow by the actual operating temperature (although a mass flow meter can be used if desired). The molar flow in the overhead is determined by converting the mass flow to molar flow from the molecular weight analyzer or specific gravity (SG) analyzer in the overhead vapor line. The water content of the overhead system is calculated assuming the water content of the overhead is all in the water leaving the receiver water boot, thus directly determining the column overhead water dew point.

The instrumentation can be used in both new and existing processes. With existing processes, instruments may need to be added and/or different instruments may need to be installed at certain points in the system in order to apply it.

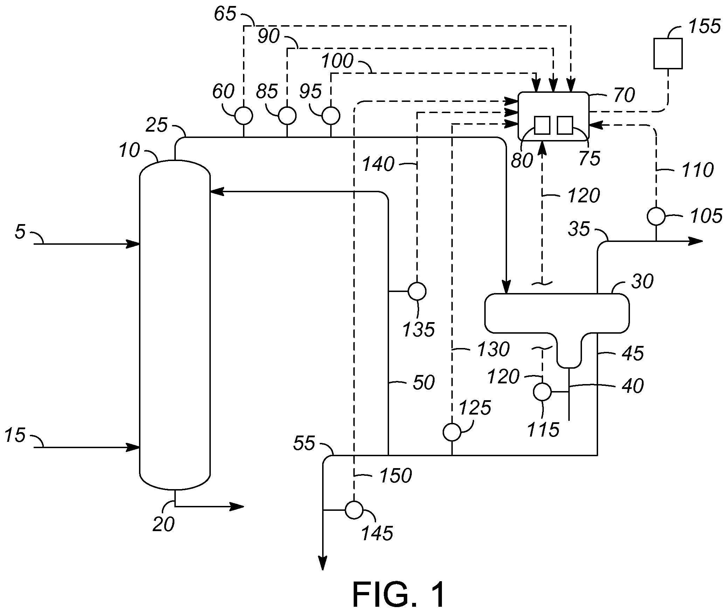

The control instrumentation for the steam stripped fractionation column is illustrated in Fig. 1. A hydrocarbon feed 5 is introduced into the fractionation column 10. Steam 15 is introduced into the fractionation column 10 and travels upward to strip volatile components from the downward flowing hydrocarbon feed 5. A hydrocarbon product stream 20 having a reduced concentration of volatile components is removed from the bottom of the fractionation column 10 and recovered. A vapor stream containing lower molecular weight hydrocarbons which have been stripped from the feed and steam is removed from the fractionation column 10, cooled, and sent to receiver 30 through overhead vapor line 25.

The stream entering receiver 30 includes steam condensate, liquid hydrocarbons, and normally gaseous hydrocarbons. A sour gas stream containing gaseous hydrocarbons is removed from the receiver 30 through receiver vapor outlet line 35 and recovered. Steam condensate is removed from receiver 30 through water outlet line 40 and recovered. A liquid hydrocarbon stream is removed from the receiver 30 through hydrocarbon liquid outlet line 45, which splits into lines 50 and 55. A portion of the liquid hydrocarbon stream is sent to the fractionation column 10 through stripper reflux line 50 as reflux. Another portion of the liquid hydrocarbon stream is recovered as net hydrocarbon liquid through stripper net overhead line 55.

There is a molecular weight analyzer or a specific gravity analyzer 60 in communication with overhead vapor line 25 to measure the molecular weight or specific gravity of the overhead vapor stream from the fractionation column 10. The molecular weight analyzer or specific gravity analyzer 60 sends the molecular weight or specific gravity measurements through line 65 to a computer 70. The computer 70 includes at least a storage unit 75 and a calculating unit 80.

Pressure gauge 85, which is in communication with overhead line 25, measures the pressure of the overhead vapor stream from the fractionation column 10, and sends the pressure measurements to the computer 70 through line 90.

Temperature gauge 95, which is in communication with overhead line 25, measures the temperature of the overhead vapor stream from the fractionation column 10, and sends the temperature measurements to the computer 70 through line 100.

Stripper vapor mass flow meter 105 measures the mass flow of the sour gas stream in receiver vapor outlet line 35, and sends the mass flow measurements to the computer 70 through line 110.

Water flow meter 115 measures the flow of the steam condensate in line 40 and sends the flow measurements to the computer 70 through line 120. The water flow meter can be a volumetric flow meter or a mass flow meter, as desired. The weight flow of water is needed, but it can either be measured directly with a mass flow meter, or be calculated from a volumetric flow corrected for temperature using the steam table specific gravity. Suitable mass flow meters include, but are not limited to, coriolis mass flow meters. Suitable volumetric flow meters include, but are not limited to, orifice plate flow meters.

Hydrocarbon liquid outlet temperature gauge 125 measures the temperature of the liquid hydrocarbon stream in hydrocarbon liquid outlet line 45 and sends the temperature measurements to the computer 70 through line 130. Alternatively, hydrocarbon liquid outlet temperature gauge 125 could be located on either the stripper reflux line 50 or the stripper net overhead line 55.

Stripper reflux hydrocarbon liquid mass flow meter 135 measures the mass flow of the liquid hydrocarbon reflux stream in line 50 and sends the mass flow measurements to the computer 70 through line 140.

Stripper net overhead hydrocarbon liquid mass flow meter 145 measures the mass flow of the net overhead liquid hydrocarbon stream in line 55 and sends the mass flow measurements to the computer 70 through line 150.

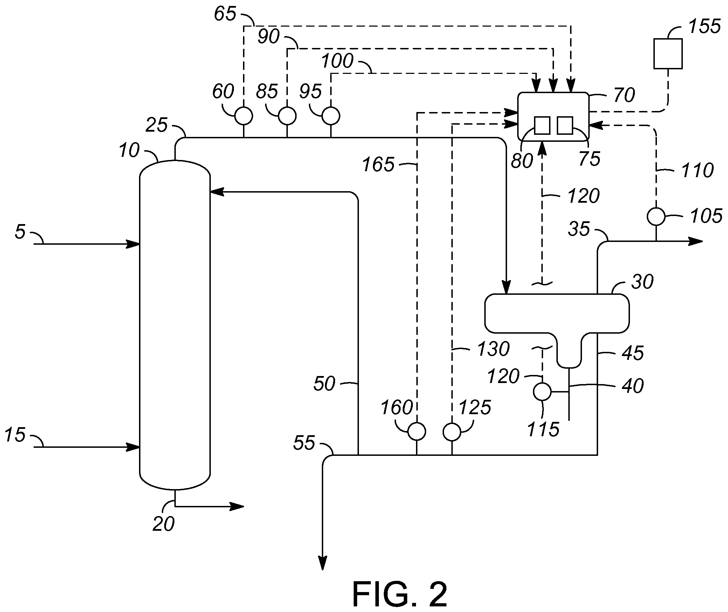

Alternatively, as shown in Fig. 2, instead of measuring the mass flow of the liquid hydrocarbon reflux stream in line 50 and the net overhead liquid hydrocarbon stream in line 55 separately, the stripper hydrocarbon liquid mass flow meter 160 measures the mass flow of the liquid hydrocarbon stream in the hydrocarbon outlet line 45 and sends the mass flow measurements to the computer 70 through line 165.

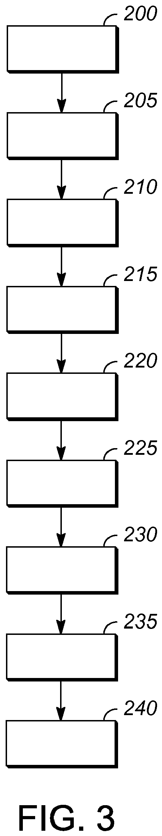

The control method is illustrated in Fig. 3. The various measurements described above are made and sent to the computer 70 in step 200 for use in the calculation of the dew point margin.

The dew point margin can be determined using the following equations. First, the total overhead flow is calculated in step 205. This can be done using equation 1a or 1b, depending on whether the mass flow of the mass flow of the liquid hydrocarbon stream 45 is measured, or and the mass flow of the liquid hydrocarbon reflux stream 135 and the mass flow of the net overhead liquid hydrocarbon stream 145 are measured.

$$\text{TOF} = \text{WFR} + \text{RVF} + \text{HLF} \qquad (1a)$$

$$\text{TOF} = \text{WFR} + \text{RVF} + \text{NOLF} + \text{RF} \qquad (1b)$$

Where:

TOF = total overhead flow (mass flow)
WFR = measured water flow rate of the water stream from the receiver (either measured as mass flow or converted to mass flow - from water flow meter 115)
RVF = measured mass flow rate of the stripper vapor stream from the receiver (from stripper vapor mass flow meter 105)
HLF = measured mass flow rate of the hydrocarbon liquid stream from the receiver (from stripper hydrocarbon liquid mass flow meter 160)
NOLF = measured mass flow rate of the stripper net overhead hydrocarbon liquid flow (from stripper net overhead hydrocarbon liquid mass flow meter 145)
RF = measured mass flow rate of the reflux hydrocarbon liquid stream (from stripper reflux hydrocarbon liquid mass flow meter 135).

Next, the total overhead moles are calculated in step 210. This calculation can be performed using equation 2.

$$\text{TOM} = \text{TOF}/\text{MWov} \qquad (2)$$

Where:

TOM = total overhead moles
TOF = total overhead flow (mass flow from equation 1)
MWov = molecular weight of the overhead stream (from molecular weight analyzer 60 or calculated from equation 3).

MWov can be calculated using equation 3 if a specific gravity analyzer 60 is used.

$$MW_{ov} = \frac{\rho_{ov} \times RTa}{Pa} \qquad (3)$$

Where:

$MW_{ov}$ = molecular weight of the overhead vapor
$\rho_{ov}$ = density of the overhead vapor (from specific gravity analyzer 60)
R = universal gas constant
Ta = absolute temperature of the overhead vapor (from temperature gauge 95 + absolute temperature conversion factor)
Pa = absolute pressure of the overhead vapor (from pressure gauge 85 + absolute pressure conversion factor).

The absolute temperature conversion factor for temperature measured in °F is 460°F. The absolute pressure conversion factor for pressure is 14.7 psia. Those of skill in the art can determine the appropriate absolute temperature and pressure conversion factors for other temperature and pressure units. Next the total moles of water are determined in step 215. This can be calculated using equation 4a or 4b, depending on whether a mass flow meter or a volumetric flow meter is used.

$$TMW = (WFR)/18.015 \qquad (4a)$$

Where:

TMW = total moles of water
WFR = measured mass flow rate of the water stream from the receiver (from water flow meter 115).

$$TMW = (VFR * \rho)/18.015 \qquad (4b)$$

Where:

VFR is the volume flow rate in consistent units
$\rho$ = density of water at the measured temperature of the hydrocarbon liquid stream from the receiver (from temperature gauge 125)
18.015 = molecular weight of water.

Next, the partial pressure of water in the overhead stream is determined at step 220. This can be calculated using equation 5.

$$PPWO = (TMW/TOM) *OP \qquad (5)$$

Where:

PPWO = partial pressure of water in the overhead vapor stream in psia
TMW = total moles of water from equation 4a or 4b
TOM = total overhead moles from equation 2
OP = measured pressure of the overhead vapor stream (from pressure gauge 85) in psia.

The saturation temperature (water dew point) is determined at step 225. It can be determined according to equation 6 using the steam tables stored in the computer.

$$WDP = \text{Temperature at PPWO} \qquad (6)$$

Where:

WDP = water dew point, in °F
PPWO = partial pressure of water in the overhead vapor stream, in psia.

Alternatively, the dew point can be calculated using equation 7, which can be programmed into the computer. Equation 7 has been verified for multiple points, and it is accurate to within 0.5°C (1°F). The error decreases at saturation temperatures above 150°C (302°F).

$$WDP = 0.20 + 118.084 \times (PPWO(psia))^{0.2215} \qquad (7)$$

Where:

WDP = water dew point (°F)
PPWO = partial pressure of water in the overhead vapor stream in psia (from equation 5).

Next, the dew point margin is determined at step 230. It can be calculated using equation 8.

$$DPM = OT - WDP \qquad (8)$$

Where:

DPM = dew point margin
OT = measured operating temperature (from temperature gauge 95)
WDP = water dew point from equation 6 or 7.

At step 235, the DPM is compared to a predetermined minimum dew point margin. The predetermined minimum dew point margin is selected for safe operation of the column. If DPM is less than the predetermined dew point margin, an alarm 155 is triggered by the computer 70 at step 240 or an operating condition is changed, or both. The change in operating condition can be performed by the computer or by the operator or both. Changes in operating condition can include, but are not limited to, changing an operating condition of the fractionation column to change the measured temperature of the overhead vapor stream, such as changing the heat input to the fractionation column.

Desirably, the measurements and calculations are continually performed by the apparatus. However, it is within the scope of the invention to take measurements and/or perform the calculations at regularly set intervals, e.g., every sec, every 30 sec, every min, every 5 min, etc., or irregularly set intervals, e.g., every 5 min, and if the DPM decreases past a pre-set limit, increasing the interval to every 30 sec, for example.

The apparatus eliminates a total overhead liquid flow meter and uses reflux and net overhead liquid mass flow meters instead.

The calculations are simplified because molar flow rates can be calculated directly without having to convert volumetric flow rates.

**Claims**

1.  A method for controlling operation of a fractionation column comprising:

    measuring a molecular weight or a specific gravity (60), a temperature (95), and a pressure (85) of an overhead vapor stream from the fractionation column (10) to a receiver (30);
    measuring a temperature (125) of a stripper hydrocarbon liquid stream from the receiver (30);

measuring a mass flow rate of the stripper hydrocarbon liquid stream (160), or measuring a mass flow rate of a stripper net overhead liquid stream (145) and a reflux hydrocarbon liquid stream (135);

measuring a mass flow rate of a stripper vapor stream (105) from the receiver (30);

measuring a flow rate of a water stream (115) from the receiver (30);

determining a total overhead flow using the flow rate of the water stream (115) from the receiver (30); the mass flow rate of the stripper vapor stream (105) from the receiver (30); and the mass flow rate of the stripper hydrocarbon liquid stream (160), or the mass flow rate of the stripper net overhead hydrocarbon liquid (145) and the mass flow rate of the reflux hydrocarbon liquid stream (135);

determining a total overhead moles from the total overhead flow;

determining a total moles of water from the measured water flow rate (115) from the receiver (30) and the measured temperature (125) of the hydrocarbon liquid stream from the receiver (30);

determining a partial pressure of water in the overhead vapor stream from the total moles of water, the total overhead moles, and the measured overhead pressure (85);

determining a dew point temperature at the determined partial pressure of water;

determining the dew point margin from the determined dew point and the measured overhead temperature (95);

comparing the calculated dew point margin with a predetermined minimum dew point margin;

initiating an alarm or changing an operating condition of the fractionation column or both when the calculated dew point margin is less than the predetermined minimum dew point margin.

2. The method of claim 1 wherein determining the total overhead flow comprises:

$$TOF = WFR + RVF + HLF$$

or

$$TOF = WFR + RVF + NOLF + RF$$

Where:

TOF = total overhead flow
WFR = measured water flow rate of the water stream (115) from the receiver
RVF = measured mass flow rate of the stripper vapor stream (105) from the receiver
HLF = measured mass flow rate of the stripper hydrocarbon liquid stream (160) from the receiver
NOLF = measured mass flow rate of the stripper net overhead hydrocarbon liquid stream (145)
RF = measured mass flow rate of the reflux hydrocarbon liquid stream (135).

3. The method of claim 2 wherein determining the total overhead moles comprises:

$$TOM = TOF/MWov$$

Where:

TOM = total overhead moles
TOF = total overhead flow
MWov = molecular weight of the overhead stream.

4. The method of claim 3 wherein the molecular weight of the overhead stream is determined from the measured specific gravity using:

$$MWov = \frac{S_{ov} R T_a}{P_a}$$

Where:

$MW_{ov}$ = molecular weight of the overhead vapor

$\rho_{ov}$ = measured specific gravity of the overhead vapor stream (60)

R = universal gas constant

Ta = absolute temperature of the overhead vapor = measured temperature of the overhead vapor stream (95) + an absolute temperature conversion factor

Pa = absolute pressure of the overhead vapor = measured pressure of the overhead vapor stream (85) + an absolute pressure conversion factor.

5. The method of claim 3 wherein determining the total moles of water comprises:

$$TMW = (WFR)/18.015$$

Where:

TMW = total moles of water

WFR = measured mass water flow rate of the water stream (115) from the receiver

18.015 = molecular weight of water;

or

$$TMW = (VFR * \rho)/18.015$$

Where:

TMW = total moles of water

VFR = measured volume flow rate of the water stream (115) from the receiver

$\rho$ = density of water at the measured temperature of the hydrocarbon liquid stream (125) from the receiver

18.015 = molecular weight of water.

6. The method of claim 5 wherein determining the partial pressure of water in the overhead vapor stream comprises:

$$PPWO = (TMW/TOM) * OP$$

Where:

PPWO = partial pressure of water in the overhead vapor stream

TMW = total moles of water

TOM = total overhead moles

OP = measured pressure of the overhead vapor stream (85).

7. The method of any one of claims 1-6 wherein changing the operating condition of the fractionation column comprises changing the operating conditions of the fractionation column to change the measured temperature of the overhead vapor stream when the calculated dew point margin is less than the predetermined minimum dew point margin.

8. The method of claim 7 wherein the measured molecular weight or specific gravity of the overhead vapor stream (60); the measured temperature of the overhead vapor stream (95); the measured pressure of the overhead vapor stream (85); the measured temperature of the hydrocarbon liquid stream (125) from the receiver; the measured mass flow rate of the stripper hydrocarbon liquid stream (160), or the measured mass flow rate of the reflux hydrocarbon liquid stream (135) and the measured mass flow rate of the stripper net overhead hydrocarbon liquid stream (145); the measured mass flow rate of the stripper vapor stream (105) from the receiver; and the measured flow rate of the water stream (115) from the receiver are provided to a computer (70) which continuously determines the calculated dew point margin, compares the calculated dew point margin with the predetermined minimum dew point margin, and initiates the alarm or changes the operating condition of the fractionation column or both when the calculated dew point margin is less than the predetermined minimum dew point margin.

**9.** An apparatus for controlling fractionation column operation comprising;

a fractionation column (10) having an overhead outlet and a reflux inlet;

a receiver (30) having an inlet, a water outlet, a hydrocarbon liquid outlet, and a vapor outlet;

an overhead vapor line (25) connecting the overhead outlet of the fractionation column (10) with the inlet of the receiver (30);

a molecular weight analyzer or specific gravity analyzer (60), a temperature gauge (95), and a pressure gauge (85) in communication with the overhead vapor line (25);

a hydrocarbon liquid outlet line (45) connected to the hydrocarbon liquid outlet of the receiver (30), the hydrocarbon liquid outlet line splitting into a stripper reflux line (50) connected to the reflux inlet of the fractionation column (10) and a stripper net overhead liquid line (55);

a temperature gauge (125) in communication with the hydrocarbon liquid outlet line (45);

a stripper hydrocarbon liquid mass flow meter (160) in fluid communication with the hydrocarbon liquid outlet line (45), or a stripper reflux hydrocarbon liquid mass flow meter (135) in communication with the stripper reflux line (50) and a stripper net overhead hydrocarbon liquid mass flow meter (145) in communication with the stripper net overhead liquid line (55);

a stripper vapor mass flow meter (105) in communication with a vapor outlet line (35) from the vapor outlet of the receiver (30);

a water flow meter (115) in communication with a water outlet line (40) from the water outlet of the receiver (30); and

at least one computer (70) in communication with the molecular weight analyzer or specific gravity analyzer (60); the overhead vapor line pressure gauge (85); the overhead vapor line temperature gauge (95); the hydrocarbon liquid outlet line temperature gauge (125); the stripper hydrocarbon liquid mass flow meter (160) or the stripper reflux hydrocarbon liquid mass flow meter (135) and the stripper net overhead hydrocarbon liquid mass flow meter (145); the stripper vapor mass flow meter (105); and the water flow meter (115).

**10.** The apparatus of claim 9 wherein at least one of the stripper hydrocarbon liquid mass meter (160), the stripper reflux hydrocarbon liquid mass flow meter (135), the stripper net overhead hydrocarbon liquid mass flow meter (145), and the stripper vapor mass flow meter (105) is a coriolis mass flow meter.

**Patentansprüche**

**1.** Verfahren zum Steuern des Betriebs einer Fraktionierungskolonne, umfassend:

Messen eines Molekulargewichts oder einer spezifischen Schwerkraft (60), einer Temperatur (95) und eines Drucks (85) eines Overhead-Dampfstroms von der Fraktionierungkolonne (10) zu einer Aufnahme (30);

Messen einer Temperatur (125) eines Stripper-Kohlenwasserstoff-Flüssigkeitsstroms von der Aufnahme (30) ;

Messen einer Massendurchflussrate des Stripper-Kohlenwasserstoff-Flüssigkeitsstroms (160) oder Messen einer Massendurchflussrate eines Stripper-Netto-Overhead-Flüssigkeitsstroms (145) und eines Rückfluss-Kohlenwasserstoff-Flüssigkeitsstroms (135);

Messen einer Massendurchflussrate eines Stripper-Dampfstroms (105) von der Aufnahme (30);

Messen einer Durchflussrate eines Wasserstroms (115) von der Aufnahme (30);

Bestimmen eines Gesamt-Overhead-Flusses unter Verwendung der Durchflussrate des Wasserstroms (115) von der Aufnahme (30); der Massendurchflussrate des Stripper-Dampfstroms (105) von der Aufnahme (30); und der Massendurchflussrate des Stripper-Kohlenwasserstoff-Flüssigkeitsstroms (160) oder der Massendurchflussrate der Stripper-Netto-Overhead-Kohlenwasserstoff-Flüssigkeit (145) und der Massendurchflussrate des Rückfluss-Kohlenwasserstoff-Flüssigkeitsstroms (135);

Bestimmen der Gesamt-Overhead-Molmenge vom Gesamt-Overhead-Fluss;

Bestimmen der Gesamtmolmenge von Wasser von der gemessenen Wasserdurchflussrate (115) von der Aufnahme (30) und der gemessenen Temperatur (125) des Kohlenwasserstoff-Flüssigkeitsstroms von der Aufnahme (30) ;

Bestimmen eines Teildrucks von Wasser in dem Overhead-Dampfstrom von der Gesamtmolmenge von Wasser, der Gesamt-Overhead-Molmenge und dem gemessenen Overhead-Druck (85);

Bestimmen einer Taupunkttemperatur bei dem bestimmten Wasserteildruck;

Bestimmen der Taupunktspanne von dem bestimmten Taupunkt und der gemessenen Overhead-Temperatur (95);

Vergleichen der berechneten Taupunktspanne mit einer vorgegebenen minimalen Taupunktspanne;

Einleiten eines Alarms oder Ändern eines Betriebszustandes der Fraktionierungskolonne oder beides, wenn die berechnete Taupunktspanne kleiner als die vorbestimmte minimale Taupunktspanne ist.

**2.** Verfahren nach Anspruch 1, wobei das Bestimmen des Gesamt-Overhead-Flusses umfasst:

$$TOF = WFR + RVF + HLF$$

oder

$$TOF = WFR + RVF + NOLF + RF$$

worin:

TOF = Gesamt-Overhead-Fluss
WFR = gemessene Wasserdurchflussrate des Wasserstroms (115) von der Aufnahme
RVF = gemessene Massendurchflussrate des Stripper-Dampfstroms (105) von der Aufnahme
HLF = gemessene Massendurchflussrate des Stripper-Kohlenwasserstoff-Flüssigkeitsstroms (160) von der Aufnahme
NOLF = gemessene Massendurchflussrate des Stripper-Netto-Overhead-Kohlenwasserstoff-Flüssigkeitsstroms (145)
RF = gemessene Massendurchflussrate des Rückfluss-Kohlenwasserstoff-Flüssigkeitsstroms (135).

**3.** Verfahren nach Anspruch 2, wobei das Bestimmen der Gesamt-Overhead-Molmenge umfasst:

$$TOM = TOF/MWov$$

worin:

TOM = Gesamt-Overhead-Molmenge
TOF = Gesamt-Overhead-Fluss
MWov = Molekulargewicht des Overheadstroms.

**4.** Verfahren nach Anspruch 3, wobei das Molekulargewicht des Overheadstroms von der gemessenen spezifischen Schwerkraft wie folgt bestimmt wird:

$$MW_{ov} = \frac{p_{ov}RT_a}{P_a}$$

worin:

$MW_{ov}$ = Molekulargewicht des Overheaddampfes
$p_{ov}$ = gemessene spezifische Schwerkraft des Overhead-Dampfstroms (60)
R = universelle Gaskonstante
Ta = absolute Temperatur des Overheaddampfes = gemessene Temperatur des Overhead-Dampfstroms (95) + ein absoluter Temperaturumwandlungsfaktor
Pa = absoluter Druck des Overheaddampfes = gemessener Druck des Overhead-Dampfstroms (85) + ein absoluter Druckumwandlungsfaktor.

**5.** Verfahren nach Anspruch 3, wobei das Bestimmen der Gesamtmolmenge an Wasser umfasst:

$$TMW = (WFR)/18,015$$

worin:

TMW = Gesamtmolmenge an Wasser
WFR = gemessene Wassermassendurchflussrate des Wasserstroms (115) von der Aufnahme
18,015 = Molekulargewicht von Wasser; oder

$$TMW = (VFR * p)/18,015$$

worin:

TMW = Gesamtmolmenge an Wasser
VFR = gemessene Volumendurchflussrate des Wasserstroms (115) von der Aufnahme p = Dichte von Wasser
bei gemessener Temperatur des Kohlenwasserstoff-Flüssigkeitsstroms (125) von der Aufnahme
18,015 = Molekulargewicht von Wasser.

6. Verfahren nach Anspruch 5, wobei das Bestimmen des Teilwasserdrucks im Overhead-Dampfstrom umfasst:

$$PPWO = (TMW/TOM) * OP$$

worin:

PPWO = Teilwasserdruck im Overhead-Dampfstrom TMW = Gesamtmolmenge an Wassers
TOM = Gesamt-Overhead-Molmenge
OP = gemessener Druck des Overhead-Dampfstroms (85).

7. Verfahren nach einem der Ansprüche 1 bis 6, wobei
das Ändern des Betriebszustandes der Fraktionierungskolonne das Ändern der Betriebszustände der Fraktionierungskolonne umfasst, um die gemessene Temperatur des Overhead-Dampfstroms zu ändern, wenn die berechnete Taupunktspanne kleiner als die vorbestimmte minimale Taupunktspanne ist.

8. Verfahren nach Anspruch 7, wobei
das gemessene Molekulargewicht oder die gemessene spezifische Schwerkraft des Overhead-Dampfstroms (60);
die gemessene Temperatur des Overhead-Dampfstroms (95);
der gemessene Druck des Overhead-Dampfstroms (85); die gemessene Temperatur des Kohlenwasserstoff-Flüssigkeitsstroms (125) von der Aufnahme;
die gemessene Massendurchflussrate des Stripper-Kohlenwasserstoff-Flüssigkeitsstroms (160), oder
die gemessene Massendurchflussrate des Rückfluss-Kohlenwasserstoff-Flüssigkeitsstroms (135) und
die gemessene Massendurchflussrate des Stripper-Netto-Overhead-Kohlenwasserstoff-Flüssigkeitsstroms (145);
die gemessene Massendurchflussrate des Stripper-Dampfstroms (105) von der Aufnahme; und
die gemessene Durchflussmenge des Wasserstroms (115) von der Aufnahme einem Rechner (70) bereitgestellt werden, der kontinuierlich die berechneten Taupunktspanne bestimmt, die berechnete Taupunktspanne mit der vorbestimmten minimalen Taupunktspanne vergleicht und den Alarm auslöst oder den Betriebszustand der Fraktionierungskolonne oder beides ändert, wenn die berechnete Taupunktspanne kleiner als die vorbestimmte minimale Taupunktspanne ist.

9. Vorrichtung zum Steuern des Fraktionierungskolonnenbetriebs, umfassend:

eine Fraktionierungskolonne (10) mit einem Overhead-Auslass und einem Rückflusseinlass; einer Aufnahme (30) mit einem Einlass, einem Wasserauslass, einem Kohlenwasserstoff-Flüssigkeitsauslass und einem Dampfauslass;
einer Overhead-Dampfleitung (25), die den Overhead-Auslass der Fraktionierungskolonne (10) mit dem Einlass der Aufnahme (30) verbindet;
einem Molekulargewichtsanalysator oder einem spezifischen Schwerkraftanalysator (60), einem Temperaturmesser (95) und einem Druckmesser (85), der mit der Overhead-Dampfleitung (25) kommuniziert;
einer Kohlenwasserstoff-Flüssigkeitsauslassleitung (45), die mit dem Kohlenwasserstoff-Flüssigkeitsauslass der Aufnahme (30) verbunden ist, wobei sich die Kohlenwasserstoff-Flüssigkeitsauslassleitung zu einer Stripper-Rückflussleitung (50), die mit dem Rückflusseinlass der Fraktionierungskolonne (10) verbunden ist, und einer Stripper-Netto-Overhead-Flüssigkeitsleitung (55) aufspaltet;

einem Temperaturmesser (125), der mit der Kohlenwasserstoff-Flüssigkeitsauslassleitung (45) kommuniziert;

einem Stripper-Kohlenwasserstoff-Flüssigkeitsmassendurchflussmesser (160), der in Fluidverbindung mit der Kohlenwasserstoff-Flüssigkeitsauslassleitung (45) steht, oder

einem Stripper-Rückfluss-Kohlenwasserstoff-Flüssigkeitsmassendurchflussmesser (135), der mit der Stripper-Rückflussleitung (50) kommuniziert, und einem Stripper-Netto-Overhead-Flüssigkeitsleitungsmesser (145) in Verbindung mit der Stripper-Netto-Overhead-Flüssigkeitsleitung (55);

einem Stripper-Dampfmassendurchflussmesser (105), der mit einer Dampfauslassleitung (35) von dem Dampfauslass der Aufnahme (30) in Verbindung steht;

einem Wasserdurchflussmesser (115), der mit einer Wasserauslassleitung (40) von dem Dampfauslass der Aufnahme (30) kommuniziert; und

mindestens einem Computer (70), der mit dem Molekulargewichtsanalysator oder dem spezifischen Schwerkraftanalysator (60); dem Overhead-Dampfleitungsdruckmesser (85); dem Overhead-Dampfleitungstemperaturmesser (95);

dem Kohlenwasserstoff-Flüssigkeitsauslassleitungs-Temperaturmesser (125);

dem Stripper-Kohlenwasserstoff-Flüssigkeitsmassendurchflussmesser (160) oder dem Stripper-Rückfluss-Kohlenwasserstoff-Flüssigkeitsmassendurchflussmesser (135) und dem Stripper-Netto-Overhead-Kohlenwasserstoff-Flüssigkeitsmassendurchflussmesser (145);

dem Stripper-Dampfmassendurchflussmesser (105); und dem Wasserdurchflussmesser (115) kommuniziert.

10. Vorrichtung nach Anspruch 9, wobei mindestens einer von Stripper-Kohlenwasserstoff-Flüssigkeitsmassendurchflussmesser (160), Stripper-Rückfluss-Kohlenwasserstoff-Flüssigkeitsmassendurchflussmesser (135), Stripper-Netto-Overhead-Kohlenwasserstoff-Flüssigkeitsmassendurchflussmesser (145) und Stripper-Dampfmassendurchflussmesser (105) ein Coriolis-Massendurchflussmesser ist.

**Revendications**

1. Procédé pour commander le fonctionnement d'une colonne de fractionnement, comprenant les étapes suivantes:

mesurer un poids moléculaire ou un poids spécifique (60), une température (95), et une pression (85) d'un courant de vapeur de tête allant de la colonne de fractionnement (10) à un récepteur (30);

mesurer une température (125) d'un courant de liquide d'hydrocarbure de séparateur provenant du récepteur (30);

mesurer un débit massique du courant de liquide d'hydrocarbure de séparateur (160), ou mesurer un débit massique d'un courant de liquide de tête net de séparateur (145) et d'un courant de liquide d'hydrocarbure de reflux (135);

mesurer un débit massique d'un courant de vapeur de séparateur (105) provenant du récepteur (30);

mesurer un débit d'un courant d'eau (115) provenant du récepteur (30);

déterminer un écoulement de tête total en utilisant le débit massique du courant d'eau (115) provenant du récepteur (30); le débit massique du courant de vapeur de séparateur (105) provenant du récepteur (30); et le débit massique du courant de liquide d'hydrocarbure de séparateur (160), ou le débit massique du liquide d'hydrocarbure de tête net de séparateur (145) et le débit massique du courant de liquide d'hydrocarbure de reflux (135);

déterminer un total de moles de tête à partir de l'écoulement de tête total;

déterminer un total de moles d'eau à partir du débit d'eau mesuré (115) provenant du récepteur (30) et de la température mesurée (125) du courant de liquide d'hydrocarbure provenant du récepteur (30);

déterminer une pression partielle d'eau dans le courant de vapeur de tête à partir du total de moles d'eau, du total de moles de tête, et de la pression de tête mesurée (85);

déterminer une température de point de rosée à la pression partielle d'eau déterminée;

déterminer la marge de point de rosée à partir de la température de point de rosée déterminée et de la température de tête mesurée (95);

comparer la marge de point de rosée calculée avec une marge de point de rosée minimale prédéterminée; et lancer une alarme ou changer une condition de fonctionnement de la colonne de fractionnement ou les deux lorsque la marge de point de rosée calculée est inférieure à la marge de point de rosée minimale prédéterminée.

2. Procédé selon la revendication 1, dans lequel la détermination de l'écoulement de tête total comprend:

$$TOF = WFR + RVF + HLF$$

ou

$$TOF = WFR + RVF + NOLF + RF$$

dans laquelle:

TOF = écoulement de tête total
WFR = débit d'eau mesuré du courant d'eau (115) provenant du récepteur
RVF = débit massique mesuré du courant de vapeur de séparateur (105) provenant du récepteur
HLF = débit massique mesuré du courant de liquide d'hydrocarbure de séparateur (160) provenant du récepteur
NOLF = débit massique mesuré du courant de liquide d'hydrocarbure de tête net de séparateur (145)
RF = débit massique mesuré du courant de liquide d'hydrocarbure de reflux (135).

3. Procédé selon la revendication 2, dans lequel la détermination du total de moles de tête comprend:

$$TOM = TOF/MWov$$

dans laquelle:

TOM = total de moles de tête
TOF = écoulement de tête total
MWov = poids moléculaire du courant de tête.

4. Procédé selon la revendication 3, dans lequel on détermine le poids moléculaire du courant de tête à partir du poids spécifique mesuré en utilisant:

$$MW_{ov} = \frac{\rho_{ov}\ RTa}{Pa}$$

dans laquelle:

$MW_{ov}$ = poids moléculaire de la vapeur de tête $\rho_{ov}$ = poids spécifique mesuré du courant de vapeur de tête (60)
R = constante universelle des gaz
Ta = température absolue de la vapeur de tête = température mesurée du courant de vapeur de tête (95) + un facteur de conversion de température absolue
Pa = pression absolue de la vapeur de tête = pression mesurée du courant de vapeur de tête (85) + un facteur de conversion de pression absolue.

5. Procédé selon la revendication 3, dans lequel la détermination du total de moles d'eau comprend:

$$TMW = (WFR)/18,015$$

dans laquelle:

TMW = total de moles d'eau
WFR = débit massique d'eau mesuré du courant d'eau (115) provenant du récepteur
18,015 = poids moléculaire de l'eau;

ou

$$TMW = (VFR*\rho)/18,015$$

dans laquelle:

TMW = total de moles d'eau
VFR = débit volumique mesuré du courant d'eau (115) provenant du récepteur
$\rho$ = densité de l'eau à la température mesurée du courant de liquide d'hydrocarbure (125) provenant du récepteur
18,015 = poids moléculaire de l'eau.

6. Procédé selon la revendication 5, dans lequel la détermination de la pression partielle d'eau dans le courant de vapeur de tête comprend:

$$PPWO = (TMW/TOM)*OP$$

dans laquelle:

PPWO = pression partielle d'eau dans le courant de vapeur de tête
TMW = total de moles d'eau
TOM = total de moles de tête
OP = pression mesurée du courant de vapeur de tête (85).

7. Procédé selon l'une quelconque des revendications 1 à 6, dans lequel un changement de la condition de fonctionnement de la colonne de fractionnement comprend le changement des conditions de fonctionnement de la colonne de fractionnement pour changer la température mesurée du courant de vapeur de tête lorsque la marge de point de rosée calculée est inférieure à la marge de point de rosée minimale prédéterminée.

8. Procédé selon la revendication 7, dans lequel on envoie le poids moléculaire ou le poids spécifique mesuré du courant de vapeur de tête (60); la température mesurée du courant de vapeur de tête (95); la pression mesurée du courant de vapeur de tête (85); la température mesurée du courant de liquide d'hydrocarbure (125) provenant du récepteur; le débit massique mesuré du courant de liquide d'hydrocarbure de séparateur (160), ou le débit massique mesuré du courant de liquide d'hydrocarbure de reflux (135) et le débit massique mesuré du courant de liquide d'hydrocarbure de tête net de séparateur (145); le débit massique mesuré du courant de vapeur de séparateur (105) provenant du récepteur; et le débit mesuré du courant d'eau (115) provenant du récepteur, à un ordinateur (70) qui en continu détermine la marge de point de rosée calculée, compare la marge de point de rosée calculée à la marge de point de rosée minimale prédéterminée, et lance l'alarme ou change la condition de fonctionnement de la colonne de fractionnement ou les deux lorsque la marge de point de rosée calculée est inférieure à la marge de point de rosée minimale prédéterminée.

9. Appareil pour commander le fonctionnement d'une colonne de fractionnement, comprenant:

une colonne de fractionnement (10) comportant une sortie de tête et une entrée de reflux;
un récepteur (30) comportant une entrée, une sortie d'eau, une sortie de liquide d'hydrocarbure, et une sortie de vapeur;
une ligne de vapeur de tête (25) connectant la sortie de tête de la colonne de fractionnement (10) à l'entrée du récepteur (30);
un analyseur de poids moléculaire ou un analyseur de poids spécifique (60), un capteur de température (95), et un capteur de pression (85) en communication avec la ligne de vapeur de tête (25);
une ligne de sortie de liquide d'hydrocarbure (45) connectée à la sortie de liquide d'hydrocarbure du récepteur (30), la ligne de sortie de liquide d'hydrocarbure se scindant en une ligne de reflux de séparateur (50) connectée à l'entrée de reflux de la colonne de fractionnement (10) et une ligne de liquide de tête net de séparateur (55);
un capteur de température (125) en communication avec la ligne de sortie de liquide d'hydrocarbure (45);
un débitmètre de masse de liquide d'hydrocarbure de séparateur (160) en communication fluidique avec la ligne de sortie de liquide d'hydrocarbure (45), ou un débitmètre de masse de liquide d'hydrocarbure de reflux de séparateur (135) en communication avec la ligne de reflux de séparateur (50) et un débitmètre de masse de liquide d'hydrocarbure de tête net de séparateur (145) en communication avec la ligne de liquide de tête net de séparateur (55);

un débitmètre de masse de vapeur de séparateur (105) en communication avec une ligne de sortie de vapeur (35) provenant de la sortie de vapeur du récepteur (30);

un débitmètre d'eau (115) en communication avec une ligne de sortie d'eau (40) provenant de la sortie d'eau du récepteur (30); et

au moins un ordinateur (70) en communication avec l'analyseur de poids moléculaire ou l'analyseur de poids spécifique (60); le capteur de pression (85) de la ligne de vapeur de tête; le capteur de température (95) de la ligne de vapeur de tête; le capteur de température (125) de la ligne de sortie de liquide d'hydrocarbure; le débitmètre de masse (160) du liquide d'hydrocarbure de séparateur ou le débitmètre de masse (135) de liquide d'hydrocarbure de reflux de séparateur et le débitmètre de masse (145) de liquide d'hydrocarbure de tête net de séparateur; le débitmètre de masse (105) de vapeur de séparateur; et le débitmètre d'eau (115).

10. Appareil selon la revendication 9, dans lequel au moins un parmi le débitmètre de masse (160) de liquide d'hydrocarbure de séparateur, le débitmètre de masse (135) de liquide d'hydrocarbure de reflux de séparateur, le débitmètre de masse (145) de liquide d'hydrocarbure de tête net de séparateur, et le débitmètre de masse (105) de vapeur de séparateur est un débitmètre de masse de Coriolis.

FIG. 1

EP 2 877 257 B1

FIG. 2

**FIG. 3**

**REFERENCES CITED IN THE DESCRIPTION**

**Patent documents cited in the description**

• US 6640161 B